# EUROPEAN PATENT APPLICATION

(11) **EP 4 221 080 A1**
(43) Date of publication of application: **02.08.2023**
(21) Application number: 22153903.4
(22) Date of filing: 28.01.2022
(51) Int. Cl.: H04L 9/40, H04L 9/32, H04L 9/00

(54) **METHOD, APPARATUSES AND COMPUTER PROGRAM FOR AUTOMATIVE BLOCKCHAINS**

(71) Applicant: Aptiv Technologies Limited, St. Michael (BB)
(72) Inventor: YOUSEF, Sebastian, 44795 Bochum (DE); BEIER, Ralf Anton, 42287 Wuppertal (DE)
(74) Representative: Hoffmann Eitle

(57) **Abstract**

A method of processing a data packet in a vehicle having a plurality of nodes interconnected in a network by generating a chain of hash value blocks. The method comprising, for each of the nodes: receiving a data packet and a first hash value block associated with the data packet from a previous node; processing the data packet by providing a time stamp information to the data packet; generating a second hash value block based on the data packet, the first hash value block, and the time stamp information; and transmitting the processed data packet and the second hash value block to a subsequent node. The method further comprises the step of determining the latency time on the second hash value block.

## Description

### Technical Field

The present disclosure relates to the field of vehicles and particularly to the field of data processing and secure data transport in a vehicle.

### Background

In the automotive field domain centric and centralized architectures have found wide applications. According to this classical architecture a central unit in the vehicle receives different flows of information, e.g. data flows, sensor data, user inputs, etc., and centrally carries out data processing and eventually transmits back different flows of information, e.g. control information, user outputs on a graphical user interface or the like.

In the context of new developments such as autonomous driving, semi-autonomous driving and Advanced Driver Assistance System, ADAS, there have also been developed so called decentralized topologies.

In such decentralized topologies electronic control units, ECUs, sensors and other nodes may communicate with each other over a bus interconnection and exchange data packets. The nodes and/or the sensors moreover, can also carry out themselves data processing and there is no centralization of input data and/or output data towards or from a single unit anymore.

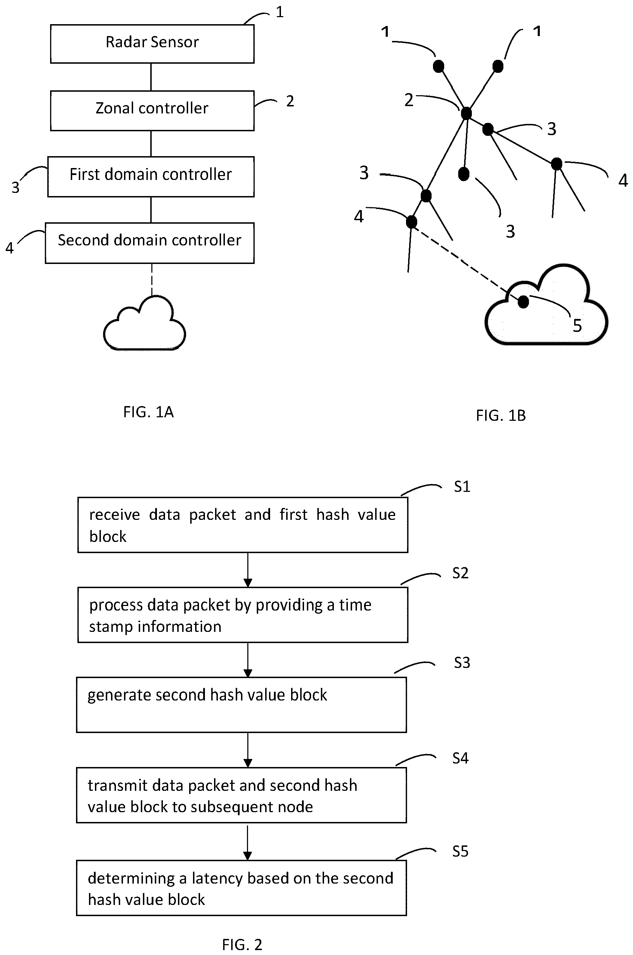

FIG. 1A and 1B illustrate examples of such decentralized topologies. In such an automotive architecture, data generation and processing can independently take place both at the sensors and/or at the nodes. A particular example of such a scalable automotive architecture is a zonal architecture in which the vehicle is divided in a plurality of zones, each having, for example, local power control, data control etc. The individual zones may have individual zonal controllers, e.g. zonal microprocessors, and the individual zonal controllers may further be connected with domain controllers which may monitor and control one or more zonal controllers. From the perspective of an automotive data network, each of the sensors, local zone controllers, domain controllers and the like may be considered as a network node. In such a decentralized topology each node may produce an output data packet based on an input data packet, which may be received from another node and/or from a sensor.

It is expected that decentralized architecture topologies may take over the more classical architecture in the future and eventually may replace it.

In the known decentralized topology, data security throughout the network of nodes should be ensured. Data packet contents, like ADAS and vehicle body related data are typically encrypted for safety and security reasons, for example to achieve data integrity.

However, affordable encryption is performance intensive and additionally does not fully protect against manipulated data being used by the vehicle instead of genuine data. Encryption and the subsequent decryption require additional hardware and software efforts and also increases the latency of the overall processing.

There is thus a need in the art to improve the data processing and data transportation both within the vehicle and from the vehicle to the cloud. It is therefore an object of the present disclosure to address the shortcomings of the related art and improve the known decentralized topologies architectures in the automotive field.

### Summary

According to an aspect of the present disclosure there is provided a method of processing a data packet in a vehicle having a plurality of nodes interconnected in a network by generating a chain of hash value blocks. The method comprises, for each of the nodes: receiving a data packet and a first hash value block associated with the data packet from a previous node; processing the data packet by providing a time stamp information to the data packet; generating a second hash value block based on the data packet, the first hash value block, and the time stamp information; and transmitting the processed data packet and the second hash value block to a subsequent node. The method of processing a data packet further comprising determining the latency time based on the second hash value block.

According to this aspect of the disclosure, it is possible to obviate the necessity of encrypting data packets thus simplifying data packet processing at the nodes of the vehicle. In addition, the generated chain of hash value blocks includes information which can be used to determine latency time of a data packet which in turn may enable to detect the intervention of a malicious party.

According to another aspect of the disclosure, the method of processing a data packet of the above aspect further comprises the steps of: i) determining the latency time by comparing the time stamp information of the second hash value block with a predetermined value or with a predetermined range of values; and ii) determining a malfunctioning based on the result of the comparison.

According to another aspect of the disclosure, the method of processing a data packet of the above aspect further comprises the steps of: i) flagging or discarding the processed data packet based on a result of the comparison of the second hash value block.

According to another aspect of the disclosure, the method of processing a data packet further comprises the step of transmitting the processed data packet to the subsequent node in cleartext. This avoids a need of data packet encryption.

Since the second hash value is generated, e.g. computed, at a given node and is generated also based on the data packet, the subsequent node may check the data packet integrity. That is, the subsequent node may check whether the received data packet is valid. As an example, at each given node a test hash value may be determined based on the received data packet and the other information contained in the previous hash value block, e.g. the timestamp and the hash value generated by the previous node, of the previous node. If the test hash value matches the second hash value, i.e. the hash value generated by the previous node, of the previous block, the received data packet is valid, e.g. it is the same as the one transmitted by the previous node.

Moreover, as explained in more detail below, the chain of hash value blocks allows to detect MITM attacks and thus allow to increase the security of the system.

Therefore, encryption can be dispensed with, thus simplifying even more data processing and system architecture.

According to another aspect of the disclosure, the generated second hash value block comprises: information indicative of the processed data packet; the time stamp information; a first hash value, wherein the first hash value is a hash value of the first hash value block; and a second hash value. According to another aspect of the disclosure the first hash value of the second hash value block is a second hash value of the first hash value block.

According to another aspect of the disclosure the second hash value is based on the data packet, the first hash value, the time stamp information and information indicative of the node.

According to another aspect of the disclosure the time stamp information is associated with a time at which the data packet from the previous node is received at the node.

According to another aspect of the disclosure the method further comprises the steps of determining a distance information between the node and another node and determining a time information between the node and the other node. For instance, the network may be an ethernet network and the data packet may be processed according to a generic precision time protocol, gPTP, based on IEEE 802.1AS-2020 to provide the time stamp.

According to another aspect of the disclosure the method further comprises transmitting the second hash value block to an external computing server, such as an external cloud computing server. It also comprises at the server evaluating the second hash value block.

According to another aspect of the disclosure at least one node of the plurality of nodes is a data processing node configured to process the data packet and generate the second hash value block.

According to another aspect of the disclosure the previous node is a data generating node associated with a sensing device. The method further comprises the steps of: providing, by the data generating node, a time stamp information to the data packet; generating, by the data generating node, the first hash value block based on the output data, and the time stamp information.

The sensing device may preferably be one of a radar sensor, a camera, or a lidar sensor of the vehicle. Moreover, the previous node may be configured to generate the data packet.

According to another aspect of the disclosure the predetermined value and the predetermined range of values are associate with a time at which the node expects the data packet.

According to another aspect of the present disclosure, the method of processing a data packet further comprises the steps of: merging two or more pluralities of hash value blocks into a merged hash value block, the merging comprising: receiving a plurality of data packets and a plurality of hash value blocks from a plurality of nodes, each hash value block of the plurality of hash value blocks being associated with a data packet from the plurality of data packets; processing the merged data packet by providing a time stamp information to the merged data packet; generating a second hash value based on the merged data packet, the plurality of hash value blocks, and the time stamp information; and transmitting the processed merged data packet and the merged hash value block to a subsequent node.

According to another aspect of the present disclosure there is provided a computer program comprising instructions which, when the program is executed by a computer, cause the computer to carry out any of the methods of the present disclosure.

According to another aspect of the present disclosure, there is provided a device for processing a data packet in a vehicle having a plurality of nodes interconnected in a network, the device comprising: a receiving unit configured to receive a data packet and a first hash value block associated with the data packet from a previous node; a processing unit configured to process the data packet by providing a time stamp information to the data packet; a generation unit configured to generate a second hash value block based on the data packet, the first hash value block, and the time stamp information; and a transmitting unit configured to transmit the processed data packet and the second hash value block to a subsequent node. The device also comprising a latency time determination unit configured to determine the latency time based on the second hash value block.

According to another aspect of the present disclosure there is provided a vehicle having a device according to the above aspect. In particular, according to the present invention, there is provided a vehicle comprising: i) at least one zone associated with a node, ii) at least one sensor associated with the zone, and iii) a device according to the above aspect.

### Brief Description of the Drawings

Embodiments of the present disclosure shall be now described, in conjunction with the appended figures which are not to be seen as restricting or limiting the scope of present disclosure but should rather be seen as illustrating the inventive concept underlying the present disclosure.
FIG. 1A and 1B show examples of a decentralized automotive node topologies.
FIG. 2 shows a method of hash value block generation in a vehicle according to the present disclosure.
FIG. 3 shows a hash value block structure and a relationship with data packets and nodes according to an example of the method of hash value block generation of the present disclosure.
FIG. 4 shows a hash value block structure and a relationship with data packets and nodes according to another example of the method of hash value block generation of the present disclosure.
FIG. 5A and 5B show respectively a normal topology and a topology wherein a MITM attacks is carried out.
FIG. 6 is a schematic illustration of a merged block.
FIG. 7 is a schematic illustration of a hardware structure of a network node.

### Detailed Description

The present disclosure allows to improve data processing and data transport within the vehicle and also from the vehicle to the cloud.

FIG. 1A shows a radar sensor 1 as an example of a sensor and more generally as an example of a data generating node. As an example of a data processing nodes the figure also shows a zonal controller ,such as a power data center, PDC 2, a first domain controller, such as a central vehicle controller, CVC, 3 and a second domain controller, such as an open server platform, OSP, controller 4. The generated sensor data packets, for instance radar data packets, may be transported over an ethernet network to the zonal controller 2 and to the domain controllers 3 and 4 until it is processed for instance for ADAS, purposes and/or active safety tasks. The data packets may also be processed by the domain and/or zonal controllers. The data packets may further be uploaded to a cloud server or a system of cloud servers, as illustrated in Fig. 1A.

The PDC may for instance concentrate sensor data, control actuators, bundle peripheral ECUs and preprocess sensor data to synchronize the data over the vehicle data backbone. The CVC may perform safety and security functions, routing and synchronizing data, managing data storage, and initiating vehicle control. Moreover, the OSP may for instance carry out high performance computing, processing of abstracted data streams from sensors and outputting visualization.

FIG. 1B shows an example of another automotive node topology of the decentralized type. In particular, while FIG. 1A shows a linear, simplified, topology, FIG. 1B shows a topology wherein nodes are connected on several branches, and also illustrates the possibility that data packets are uploaded, e.g. via a radio interface of the vehicle, to cloud servers, represented by node 5, for further evaluation.

In a decentralized node architecture of a vehicle, it may be unnecessary to encrypt data packets, for example because the content of at least some of the data packets in the automotive applications is not per se of a sensitive nature. In fact, data packets transmitted between nodes of the vehicle include, for instance, parking sensors or parking camera outputs, which even if intercepted by a malicious party may not be of particular use. Nonetheless, since protection from attacks is an important requirement, data packet encryption may still be necessary to mitigate the risk of successful attacks.

However, the process of encrypting data packets is performance intensive and moreover does not protect in a satisfactory manner from so called man-in-the-middle, MITM, attacks which may lead to compromised or manipulated sensor data being taken for genuine data and hence transmitted and subsequently processed at the vehicle. In fact, based on the encryption only, there is no way to verify the source of the data. Hence it cannot be verified that a given data packet truly originates from the relevant sensor or relevant node of the vehicle.

On the other hand, according to an aspect of the present disclosure it is possible to obviate the necessity of data packet encryption by generating a chain of hash blocks associated with respective data packets transmitted between the nodes of the vehicle. This generated automotive blockchain further includes information which can be used to detect, either in real-time or at a later time point, the intervention of a malicious party, as will be further explained below.

Moreover, the present disclosure enables to improve data processing by increasing the security of the decentralized architecture. According to another aspect of the present disclosure, this can be achieved in view of the generated hash value blocks which allows detection of the node(s) in the vehicle architecture at which a particular data packet, for instance a compromised data packet, was firstly processed.

In the following detailed description, a number of specific details are set forth to provide a thorough understanding of the various described embodiments. However, these details should not be construed as being limiting. Further, in the present disclosure descriptive terms such as first, second, etc. may be used to describe various elements. However, these elements should not be construed as being limited by these descriptive terms. In fact, these descriptive terms are only used to distinguish one element from another. It is to be noted that like reference signs can denote identical or functionally similar elements, unless indicated otherwise.

At least parts of the following description may focus on the ethernet network. The skilled person would readily understand, however, that independent from that, the present concepts can also be used on any other network technology or even simpler communication paths like CAN-FD or the like.

In the following disclosure the controllers of the vehicles as the zonal or domain controller may simply be referred to as nodes, control nodes, or data processing nodes. In addition, also the sensors of the vehicles may be referred to as nodes, sensor nodes. A sensor is an example of a data generating node, that is a node that generates data, such as radar data, LiDAR data, camera data or the like. That is, the measured data originate at the sensor node and it is the sensor node that generates an initial data packet or a plurality of initial data packets based on which a chain of hash value blocks, in other words, an automotive blockchain, is built by a subsequent processing of the initial data packet(s) at the data processing nodes, control nodes.

The data processing nodes and the data generating nodes may be interconnected in a network in the vehicle architecture and at least one of the nodes may be connected to a cloud system and communicate with the cloud system. In the example of Figs. 1A and 1B, the radar sensor 1 is a data generating node, where the initial data packets are generated, and the control nodes 2, 3, and 4 are data processing nodes used to build a chain of hash value blocks, as will be described below. In Fig. 1B node 5 is associated with a cloud system to which control node 4 is connected, for example, via a radio interface, represented as dashed line in the figure.

As described above, the present disclosure is directed at improving processing and transport of data packets. In fact, since it is possible to dispense with encryption of data packets, and hence also dispense with decryption, latency of the data packet transmission may be reduced.

To this end according to an embodiment of the present disclosure, there is provided a method of processing a data packet by generating a chain of hash value blocks as explained below.

As used herein a hash value block is a block including at least one hash value as well as information associated with the at least one hash value. A hash value may be a value obtained by hashing a set of data associated with the hash value block as for instance information relating to a data packet associated with the hash value block and a time stamp of the data packet. The hashing may be carried out at each node, for instance at the data generation or control node, data processing or sensor node, with a private key of the node. The hashing procedure or hashing function may be for instance an HMAC hashing, i.e. Keyed-Hashing for Message Authentication. The cryptographic hash function may for instance be MD5, SHA1, and/or SHA256.

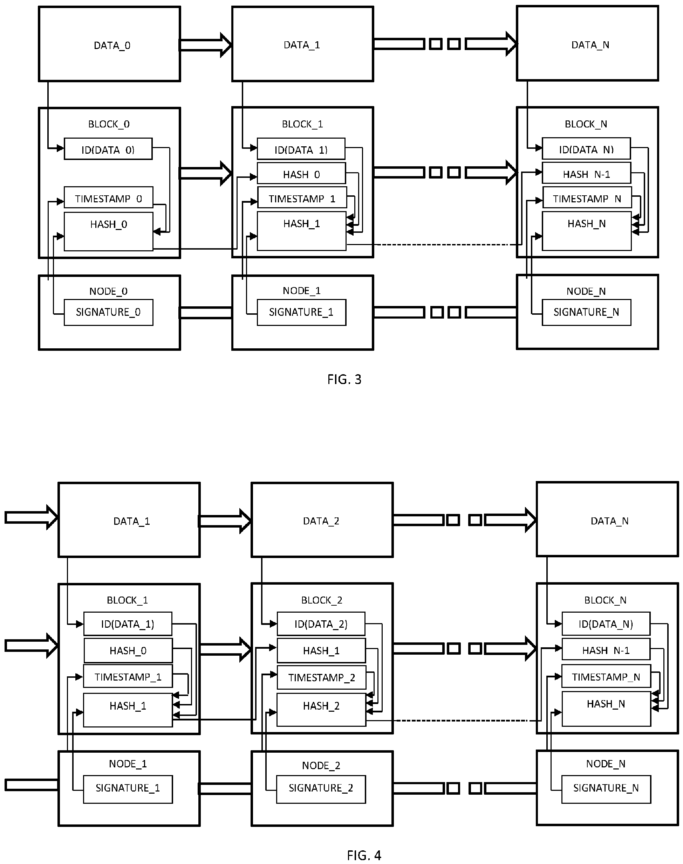

As described in detail below, according to the present disclosure a hash value block may have either one hash value or two hash values, in particular depending on whether the hash value block is generated by a data generation node or a data processing node. A data generation node, e.g. sensor node, reflects the origin of the automotive blockchain described herein and may have one hash value, see Fig. 3 discussed below, while a subsequent data processing node may generate a hash value block of two hash values value, see Fig. 4 discussed below.

If a hash value block has two hash values, the hash values may be obtained by hashing different set of data. That is, between the two set of data, there is at least one piece of data or one data element, which is different. For instance, the second set of data may fully include the first set of data and additionally include a further piece of data, such as a timestamp. In this case the hash values resulting from the hashing procedure of the two data sets would be different.

With reference to FIG. 2, the method comprises for each data processing node a first step S1 of receiving a data packet and a first hash value block associated with the data packet from a previous node. Here, the previous node may be a data processing node or control node, such as control nodes 2, 3, or 4 in Figs. 1A and 1B, or the previous node is a data generation node or sensor node, such as radar node 1 in Figs. 1A and 1B. The hash value block may be associated with the data packet by including information relative to the data packet. In other words, the hash value block may be associated to a given data packet by referring to the given data packet, e.g. when storing or transmitting the hash value block and the associated data packet together. For instance, the hash value block may include a hash value which was obtained by hashing a set of data of the data packet including, for example, data indicative of the data packet, a subset of data of the data packet, or the entire data, i.e. payload, of the data packet to which the hash value block is associated. Preferably, to possibly retain a small block size and reduce processing costs, the hash value block may include a unique identifier of the data packet instead of the data packet itself. For instance, it may include a "checksum" of the data packet or any other unique identifier derived from the data packet for error detection, which may correspond to the hash value of the whole data packet. The skilled person understands that hashing such a unique identifier may reduce storage and processing costs while still providing a measure of data integrity.

In a second step S2 each node processes the data packet by providing time information as for instance a time stamp information to the data packet. Any format which is able to reliably provide a time information to the data packet may be obtained for timestamping the data packet. For example, a time stamp according to the generic precision time protocol, gPTP, based on IEEE 802.1AS-2020 may be provided to the data packet. That is, during the transport of the data packet through the automotive network, a series of time information or time stamps can be provided to the data packet so that a subsequent evaluation of data packet transport allows for a control of latency times. In addition, the data processing may further include evaluation or control of data elements in the data packet for control purposes of the respective node.

Furthermore, in a third step S3, each node generates a second hash value block based on the data packet, the first hash value block, and the time stamp information. That is, each node performs a hashing procedure on a set of data of the data packet, including, for example, at least information indicative of the data packet, a subset of data of the data packet, or the entire data, payload, of the data packet, on the first hash value block, and on the time stamp information generated in step S2.

In a fourth step S4, each node transmits the processed data packet and the second hash value block to a subsequent node, for example from node 2 → 3 or node 3 → 4 in the examples of Figs. 1A and 1B.

Finally, in a fifth step S5, the method comprises the step of determining the latency time of the data packet, for instance of the processed data packet, based on the second hash value block. The fifth step may be carried out at the vehicle, for instance at the node. However, the present disclosure is not limited to this case. For instance, the fifth step may be also carried out at an external server.

Therefore, according to steps S1 to S4 a node receives a data packet and a first hash value block from a previous node and transmits to a subsequent node a second hash value block which is based on the first hash value block and which is associated with the received data packet.

Moreover, each node of the plurality of nodes may also transmit the respective processed data packet it processed to the subsequent node.

The generation hash value block thus may be iteratively repeated to generate a plurality of hash value blocks and a plurality of processed data packets. Therefore, the disclosure also relates to a method of generating a chain of hash value blocks in connection with steps S1 to S4. Each processed data packet and each generated hash value block may occur in a chronological order at each of the respective nodes of the plurality of nodes. The thus generated sequence of hash value blocks is an example of an automotive blockchain.

Since according to the automotive blockchain the second hash value is computed at each given node and is computed also based on the data packet, the subsequent node may check data packet integrity. That is, the subsequent node may check whether the received data packet is valid or has been transmitted without errors, i.e. has data integrity. As an example, at each given node a test hash value may be computed based on the received data packet and the other information contained in the hash value block received and associated with the data packet. The information contained in the hash value block may be for example the timestamp and the hash value generated by the previous node. If the test hash value matches the second hash value of the previous block, the received data packet may be determined to be valid. That is, it may be determined to be the same as the one transmitted by the previous node.

Additionally, as explained in more details below the generated automotive blockchain allows for an exact determination of a position at which the MITM attack occurs.

As used herein the term previous and subsequent merely indicate a chronological order with respect to the transmission direction of a data packet.

Therefore, and for instance with reference to FIG. 1A and 1B with respect to the domain controller 3, domain controller 4 may be a subsequent node and the zonal controller 2 may be a previous node when the data packet is transmitted from the sensing node 1 to the domain controller 4. However, with respect to the domain controller 3, domain controller 4 may be a previous node and zonal controller 2 may be a subsequent node when the data packet is transmitted from domain controller 4 to the sensing node 1. This may for instance be the case when controlling actuators using data packets. That is, the wording "*subsequent*" and "*previous*" are relative to the travel direction of the data packet rather than to the topology of the network. In yet other words a subsequent node is a chronologically subsequent node and a previous node is a chronologically previous node.

That is with respect to a same node, another node may be at the same time a previous node and a subsequent node based on the flow of the given data packet for which a hash value block is being generated.

Each node of the plurality of nodes may also transmit the processed data packet to the subsequent node in cleartext. The skilled person understands that cleartext refers to information that is sent or stored in an unencrypted form, that is, in a form, in which the information is readily processable and readable. In other words, the processed data packet may be transmitted in an unencrypted form. Nonetheless, the data packet may also be transmitted in an encrypted form, signed or packed in any different forms. In particular, a node may transmit data packets both in an encrypted or in cleartext. Whether the transmission of a given data packet by a given node is encrypted or in cleartext may depend on a number of factors. For instance, it may depend on the content of the data packet, on the type of processing performed on the data packet and/or on the node from which, or to which, the data packet is received, or transmitted.

In other words, a same node may perform transmission in cleartext or in an encrypted manner based on the data packet and or based on the node topology.

Moreover, according to some aspects, one or more of the nodes of the plurality of nodes, may also transmit the second hash value block it generated to an external server. The external server may preferably be a cloud server which is configured to further evaluate the second hash value block(s) together with the data packet(s) it received. For example, the evaluation at the server may comprise controlling or evaluating the latency times of the data packets. It may also comprise assessing data integrity of the data packets. The external server may perform latency time control and integrity assessment as described above. Advantageously, the server may collectively evaluate a plurality of automotive blockchains of a plurality of vehicles, and may identify whether latency issues or MITM attacks, see below, can be localized geographically.

In fact, according to some embodiments it may be preferable not to analyze the hash value block in real time and/or at the vehicle and it may rather be preferable to process them at a later point in time. Moreover, it may also be preferable to process hash value blocks of a given vehicle in considerations of, or together with, the hash value blocks of another, different, vehicle. For instance, the comparison with a predetermined value or with a predetermined range of values, which is described in detail later on, may be performed also in consideration of the comparison results of at least another vehicle. This may allow to take into account factors additional to those taken care of during the initial system calibration procedure.

These operations are preferably enabled on a cloud computing server.

The method of generation of the hash value block is now further exemplified in connection with two possible cases. The first case is a case wherein the second hash value block is generated by a node directly connected to a data generating node. A data generating node may be a node associated with a sensor, or a node which otherwise generates data without being associated with a sensor. The second case is a case wherein the second hash value block is generated by a node which is not directly connected to a data generating node but there is at least an intervening, or intermediate, node between the data generating node and the node generating the second hash value block.

Moreover, a method of detection of a MITM attack using the generated chain of block will also be explained after the two examples.

### First Example: the previous node is a data generating node

The first example is now outlined with reference to FIG. 3.

FIG. 3 shows a plurality of hash value blocks together with the respective data packets and nodes of the network. In particular, as it can be seen, each hash value block is associated, e.g. stored together, transmitted together, with a respective node and with a respective data packet.

For ease of illustration only three hash value blocks, three nodes and three data packets are explicitly depicted in the figure. However, it will be apparent that the present disclosure encompasses an arbitrary number N of hash value blocks, N associated data packets and N associated nodes, wherein N is an integer number larger than or equal to 2. Moreover, while for the sake of explanation it is assumed here that each hash value block has an associated data packet the disclosure is not limited thereto and there may be cases wherein a hash value block is associated with two or more associated data packets.

According to the first example, node NODE_1 may be a control node as for instance the zonal controller 2. In this case the previous node, NODE_0, may be a node associated with a sensing device, sensing node, and directly connected with the zonal controller 2. That is the previous node may be a data generating node. Directly connected means that there are no intervening nodes between NODE_0 and NODE_1. For instance, the data generating node may be associated with a radar sensor 1, as shown in Figs. 1A and 1B. The radar device itself or the node associated thereto may generate the data packet.

The previous node, i.e. the data generating node NODE 0 generates the first hash value block BLOCK_0 associated with data packet DATA_0.

According to this example, NODE_1, e.g. the zonal controller 2, may directly receive the data packet DATA_0 generated by the data generating node NODE_0. It may also directly receive the associated first hash value block, i.e. BLOCK_0.

The node NODE_1 provides time information to the received data packet DATA_0 generated by the sensing device associated with NODE_0. The time information is provided by timestamping the data packet DATA_0 so as to obtain a processed data packet DATA_1.

The node NODE_1 generates the second hash value block, BLOCK_1, based on information on the data packet DATA_1, and the time stamp information TIMESTAMP_1 of data packet DATA_1.

With more details the hash value block BLOCK_0 generated by the data generating node NODE 0 may comprise information indicative of the data packet DATA_0 as for instance data packet identification information ID(DATA 0). The data packet identification information ID(DATA_0) may exemplarily be a data packet ID or any information which enables to unambiguously identify the data packet DATA_0. The hash value block BLOCK _0 also comprises time stamp information, TIMESTAMP_0, and a hash value HASH_0. In this case, the hash value BLOCK _0 may have only a single hash value. The hash value HASH_0 may be obtained by hashing the information indicative of the data packet ID(DATA 0) and the time stamp information TIMESTAMP_0. Optionally, the hash value HASH_0 may be obtained by also hashing information indicative of the data generating node NODE_0. The information indicative of the data generating node may for instance be a signature SIGNATURE_0 of the node NODE_0. However, it may also be any other information enabling to unambiguously identify the node NODE_0.

The timestamp information may preferably be associated with a time at which the data packet DATA 0 is received at the associated node. Alternatively, it may also be associated with a time at which the data packet is otherwise processed by the data generating node NODE_0 or generated by the node.

The first node NODE_1 processes the received data packet DATA_0 received by the data generating node NODE 0 so as to form a first data packet DATA_1, also referred to as processed data packet. The NODE_1 processes the data packet by providing time stamp information to the data packet. However, the NODE_1 may also perform additional processing and/or evaluation of the data packet DATA_1.

The first node NODE 1 generates a second hash value block BLOCK_1 associated with the processed data packet DATA_1.

The second hash value block BLOCK_1 may comprise information indicative of the processed data packet, ID(DATA_1), time stamp information TIMESTAMP_1 relative to the processed data packet DATA 1, a first hash value HASH 0 and a second hash value HASH_1. The first hash value HASH_0 may be based on, or correspond to, the (only) hash value HASH_0 of the first hash value block BLOCK_0 generated by the data generating node NODE_0.

The second hash value HASH_1 may be based on information on the processed data packet DATA_1, for instance on identification information of the processed data packet ID(DATA_1), on the first hash value HASH_0 and on the time stamp information TIMESTAMP _1 of the processed data packet. Optionally, it may also be based on information indicative of the node NODE_1, as for instance a signature of the node. However, the information indicative of the node may also be any other information enabling to unambiguously identify the node. Similar as the first hash value HASH_0, the second hash value HASH_1 may be obtained by hashing a set of data associated with the hash value block. For instance, the second hash value HASH 1 may be obtained by hashing information of the processed data packet ID(DATA_1), e.g. unique identifier, unique checksum, or the entire data packet, the first hash value HASH_0 and the time stamp information TIMESTAMP _1 of the processed data packet. Optionally, it may also be obtained by hashing information indicative of the node NODE_1.

The time stamp information TIMESTAMP _1 of the processed data packet DATA_1 may preferably be associated with a time at which the data packet from the previous node, i.e. from the data generating node, is received at the node. Alternatively, the time stamp may be associated with a time at which the data packet is processed at the node or at which the processing at the node is completed.

Preferably, however, all the data packets DATA_1 to DATA_N are timestamped with respect to a same event at the corresponding node. For instance, with respect to the processing time, i.e. either starting timepoint of the processing or finishing timepoint of the processing, or with respect to a reception time at the node. The data packet DATA_0 associated with the data generating node may be timestamped at the time of the generation.

The first hash value HASH_0 of the second hash value block BLOCK_1 may correspond to the hash value HASH_0 of the first hash value block BLOCK_0. In this manner, since each hash value block is linked to a (chronologically) previous hash value block, it is possible to create a chain of hash value blocks, i.e. an automotive blockchain. The link, or pointer, is explicit, i.e. is not hashed but is a plain value included in the hash value block. In other words, each hash value blocks of the hash value block chain explicitly points to the previous hash value block.

Moreover, if the first hash value HASH 0 of the second hash value block BLOCK _1 is the same as the (single) hash value HASH_0 of the first hash value block BLOCK_0 it is possible to easily validate the received data packet. In fact, in order to validate a received data packet, the hash value corresponding to the data packet may be recomputed and compared to the one stored in the associated block.

By iteratively storing the previous block's second hash value as the first hash value in the current block an automotive blockchain is formed, which allows validating all blocks one after another. This may also be referred to as backward validation. If one block is known to be valid, all previous blocks are valid too.

### Second Example: the previous node is not a data generating node

The second example is now outlined with reference to FIG. 4.

According to a second example, the previous node may be a node different from the data generating node. That is, the second hash value block is generated by a node which is not directly connected to a data generating node, i.e. sensing node, but there is at least one intervening node between the data generating node and the node generating the second hash value block.

For instance, and with further reference to FIG. 1 and 4, the node NODE_2 generating the hash value block may be the domain controller 3, or the domain controller 4, and the previous node, NODE_1 may be the zonal controller 2, or the domain controller 3.

With further reference to FIG. 4, NODE 1 generates the data packet DATA_1 and the first hash value block BLOCK _1 and NODE_2, generates the second hash value block BLOCK _2 as well as the processed data packet DATA_2. The data packet DATA_1 generated by NODE_1 may correspond to the data packet DATA_0 that the node NODE_1 receives from the sensing device 1 which has additionally been timestamped. Therefore, as used in this section, the expressions "generate a data packet" or "generated data packet" may simply indicate that a data packet generated by a data generation node is received at NODE_1, timestamped at NODE_1 and eventually transmitted to the subsequent node NODE_2. In other words, NODE_1 may also not generate any payload of the data packet but simply process the data packet by timestamping it and transmitting it.

The structure of the hash value block generated by NODE_2 according to the second example may be similar to the structure of the hash value block generated by NODE_1 and described above in connection with the first example.

For ease of explanation in the following, special emphasis is placed on the differences between the structure of the hash value block of the second example and the hash value block of the first example.

According to the second example, the first hash value block BLOCK_1 is not generated by a data generating node NODE_0 but is generated by a subsequent node NODE_1 different from the data generating node NODE_0. Therefore, the first hash value block BLOCK_ 1 comprises two hash values HASH_0 and HASH_1. That is, the first hash value block BLOCK_1, generated by the previous node NODE_1, has itself a first hash value and a second hash value. The second hash value HASH_1 of the first hash value block BLOCK _1 may be based on data packet information ID(DATA_1), on the first hash value HASH_0 of the first hash value block BLOCK_1, on the time stamp information TIMESTAMP _1 of the data packet and optionally, also on information indicative of the node associated with the zonal controller 2, SIGNATURE_1.

### The first hash value block BLOCK _1 may also comprise the time stamp information TIMESTAMP_1 and the data packet information ID(DATA_1).

The second node NODE 2 receives the first hash value block BLOCK_1 and generates the second hash value block BLOCK _2. It may also receive the first data packet DATA_1 transmitted by node NODE 1 and may process it as second packet data DATA_2 and in turn transmit it as a processed data packet to the subsequent node, NODE_3 of the architecture, not shown in the figure.

The second hash value block BLOCK_2 may comprise the time stamp information TIMESTAMP _2 relating to the processed data packet DATA_2 and the data packet information ID(DATA_2), indicative of the processed data packet.

The second hash value block BLOCK _2 may also comprise two hash values, a first hash value and a second hash value.

The first hash value of the second hash value block BLOCK _2 may be a hash value of hash value block BLOCK _1. That is, it may be a hash value of the hash value block on the basis of which the second hash value block BLOCK _2 is generated.

The first hash value HASH 1 of the second hash value block BLOCK_2 may correspond to the second hash value HASH_1 of the first hash value block BLOCK_1.

### MITM attacks detection

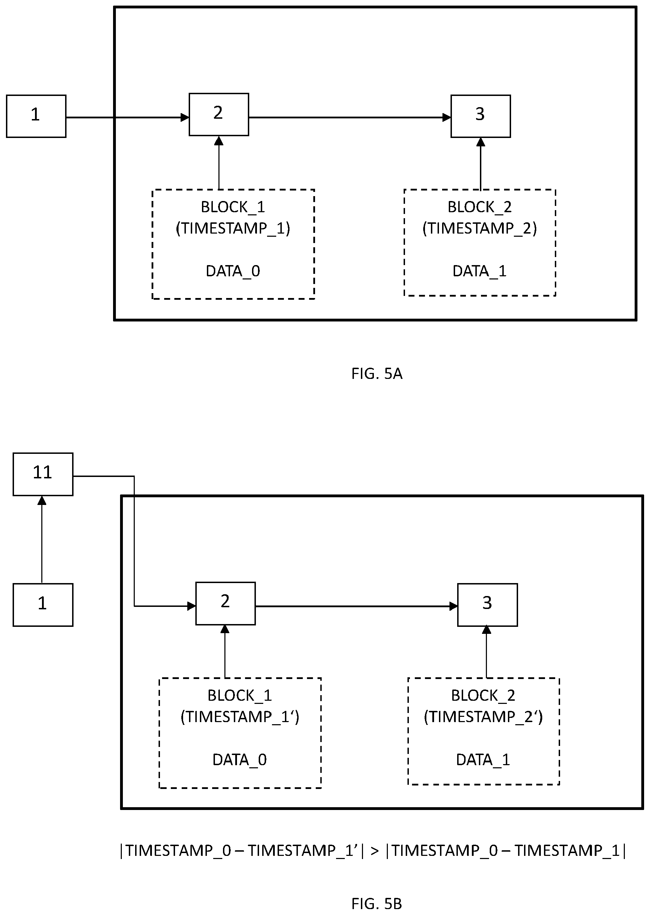

In the following the concept of a man in the middle, MITM, attack detection according to the present disclosure is described in connection with the node topology of FIG. 5A and FIG. 5B and the automotive blockchain concept described above. These figures show respectively a normal topology and a topology wherein a MITM attacks is carried out. A normal topology means a vehicle topology and a flow of data packets which is not altered by an attack as for instance the MITM.

In FIG. 5A and 5B, the sensor 1, the zonal controller 2 and the domain controller 3 are connected to each other via a network. According to an embodiment, the network may be an ethernet network. In this case, the data packets exchanged between the nodes may be processed according to a gPTP protocol to provide the time stamp.

It is to be understood that the gPTP protocol is an example of an algorithm/protocol enabling to determine a distance information between any two nodes, i.e. between the previous node and the subsequent node. The protocol, for instance the gPTP protocol, may provide all nodes with a synchronized clock. Therefore, time differences directly relate to the distances between two nodes. It moreover is an example of an algorithm/protocol enabling to determine a time difference information between any two nodes, i.e. the previous node and the subsequent node. In view of this the gPTP protocol allows to achieve reliable information as to the travel path of the data packets and of the hash value blocks.

Any algorithm/protocol enabling to determine a distance between the nodes and a time difference between the nodes may be used instead of the gPTP protocol.

In FIG. 5A DATA_0 and BLOCK _0 generated by the sensor, i.e. sensor node, 1 or a data generating node associated therewith, are supplied directly to the zonal controller 2. Correspondingly the zonal controller 2 processes and timestamps the data packet DATA_0 to generate data packet DATA_1, generates hash value block BLOCK _1 based on BLOCK _0 and provides both generated DATA_1 and BLOCK _1 to the subsequent node, i.e. the domain controller 3. In particular, BLOCK_1 includes TIMESTAMP_1, whose value depends on the path on the ethernet cable between sensor 1 and zonal controller 2 and on the processing time of the previous node.

In a MITM attack a malicious party, i.e. a device, 11 intercepts the data traffic, i.e. the exchanged data packets and the hash value blocks. After the interception, the attacker sends the original data or compromised data back to the vehicle.

The attacker, by intervening for instance between sensor 1 and zonal controller 2 changes the topology of the nodes. This results in an increased transmission time for DATA_0 to travel from the sensor 1 to the zonal controller 2. Consequently, the zonal controller 2 processes data packet DATA_0 and timestamps it with a timestamp, TIMESTAMP_1'. The time difference between TIMESTAMP _1' and TIMESTAMP_0 will be greater than the expected time difference between TIMESTAMP _1 and TIMESTAMP _0. Consequently, also absolute TIMESTAMP _2' will be delayed, but the time difference between TIMESTAMP_1' and TIMESTAMP _2' is not greater than an expected time difference related to the distance between node 2 and 3. That is, this mechanism allows for an exact determination of a position at which the MITM attack occurs.

More generally, in case a MITM attack unfolds between node NODE_J and node NODE_J+1 the difference between the timestamps of the hash value blocks respectively generated, i.e. TIMESTAMP _J' and TIMESTAMP _J+1' will be larger than difference between the timestamps, TIMESTAMP_J and TIMESTAMP _J+1 of the hash value blocks generated by nodes between which no MITM attack has unfolded.

This is not limited to the difference between the timestamps of two hash value blocks generated by neighboring nodes. Rather it holds for the difference of timestamps of any hash value blocks as long as the point in the architecture wherein the MITM unfolds lies between the nodes generating the two hash value blocks.

Therefore, by comparing the time stamp information of a given hash value block with a predetermined value it is possible to determine a malfunctioning. Based on the result of the comparison, it may be possible to flag or discard the processed data packet since the processed data packet may have been compromised. In other words, by using latency information, i.e. the latency time, it is possible to establish a consensus algorithm between the blocks and hence the nodes of the architecture.

A node of the plurality of nodes may perform the comparison, and in case the comparison is indicative of a malfunctioning may report or flag a given data packet and the corresponding hash value block to another node as for instance a domain controller.

In the example, the predetermined value is a time difference between TIMESTAMP _0 and TIMESTAMP _1. A determination that a time difference between TIMESTAMP _0 and the timestamp TIMESTAMP _1' of the hash value block is greater than the predetermined value may therefore be used to determine the possibility of a MITM attack.

The comparison may also be carried out with respect to a predetermined range of values instead than with respect to a single predetermined value. This may have the advantage that some flexibility can be taken into account in the comparison step. In fact, the time at which a data packet is received at a given node, say node i, also depend on the time it takes to the previous node, i.e. node i-1, to process the data packet. In particular, there may be cases in which burst of data, for instance burst of radar data, occurs wherein a larger than usual amount of sensing data is generated. A larger than usual amount of data may also affect the time it takes for a node to process to process the data.

In case the processing at a previous node is particularly lengthy, the data packet may arrive at the subsequent node with some delay with respect to a normal case, i.e. a case in which the processing is not lengthy. Therefore, in such a case a comparison of the timestamp difference with a single fixed and predetermined value may wrongly indicate a MITM attack. On the other hand, a comparison with a predetermined range of values may allow more flexibility. A situation in which a larger than usual amount of data is generated or need to be processed in a shorter than usual time frame may also be referred to as a burst of data.

The system may recognize that the burst of data has occurred and may be able to adapt the predetermined value and or the predetermined range accordingly. In other words, the predetermined value and the predetermined range may also be based on the data packet, data traffic, or environmental factors.

The predetermined value and the predetermined range of values may be associated with a time information indicative of a time at which the node expects to receive the data packet.

That is, the predetermined value and/or the predetermined range of values can be individually determined for each node of the automotive architecture. Moreover, in case a data processing node is connected to more than one data generation node, a number of predetermined values and/or predetermined ranges of values are determined for each of the nodes. In other words, for each node, a number of predetermined values and/or of predetermined ranges of values are determined, and the number corresponds to a number of data generating node to which the data processing node is connected.

For determining the predetermined value and the predetermined range the specific architecture of the plurality of nodes and the packet processing time at a given node may be taken into account.

For instance, the predetermined value and the predetermined range may be determined during an initial system calibration procedure. Said calibration procedure may take place at production end of line or in the car shop. In view of the initial calibration the overall system may determine for each node of the system in which range the several transportation latencies, i.e. the predetermined value or the predetermined range, should lay at.

Moreover, according to an embodiment, the system may be able to adjust the predetermined value or the predetermined range of values upon detection of the burst of data. In other words, the predetermined value may be adjusted based on an amount of data generated by a data generation node.

Since according to the present disclosure, a plurality of hash blocks associated with a respective data packet and respective node are created, it may be possible to detect at which point of the architecture the MITM attacks is carried out. In fact, the increase of latency will take place only in correspondence of the nodes between which the MITM attack unfolds.

### Merging node

In the above description a case has been described in which a node receives a single data packet and a single hash value block as input and produces, as output, a single data packet and a single hash value block. However, according to some embodiments it may be advantageous that a node receives a plurality of data packets and a respective plurality of hash value blocks as input and produces, as output, a single merged data packet and a single merged hash value block.

In more detail, according to some embodiment it is possible to merge two or more pluralities of hash value blocks into a merged block. Each plurality of the two or more pluralities of hash value blocks comprise one or more hash value blocks, wherein a plurality of two or more blocks form a chain of hash value blocks, i.e. respective blockchains arriving from different sections of the network architecture.

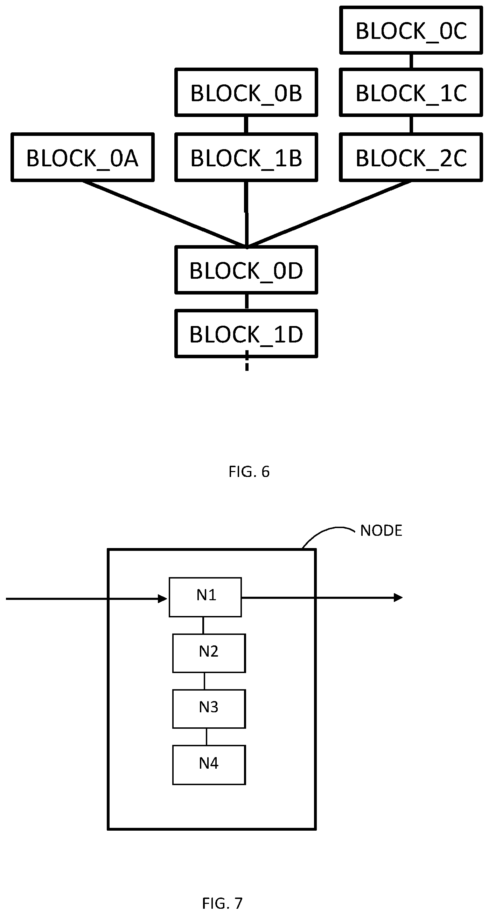

This may for instance the case, when a node performs "sensor fusion" by combining several measurements from sensing device into a new data packet. For instance, and with some more details, a node may combine two camera pictures data packets from two nodes NODE_0A and NODE_1B, i.e. the nodes associates with BLOCK _0A and BLOCK _1B of FIG. 6, to provide a data packet associated with a stereoscopic picture.

Fig. 6 shows an example of the merging of three pluralities of hash value blocks comprising a single hash value block BLOCK_0A, a first chain of hash value blocks, and a second chain of hash value blocks, wherein the first chain of hash value blocks comprises BLOCK_0B and BLOCK_1B, and the second chain of hash value blocks comprises BLOCK_0C, BLOCK_1C and BLOCK _2C. The three pluralities of hash value blocks are merged into the merged hash value block BLOCK_0D. The merged data packet and the merged hash value block are transmitted to a subsequent node, where the next hash value block, BLOCK_1D, is generated.

The merging comprises the step of receiving, at a merging node, a plurality of data packets and a plurality of hash value blocks from a respective plurality of nodes. Each hash value block of the plurality of hash value blocks is associated with a data packet from the plurality of data packets. The merging node generates the merged data packet by combining or merging the different data packets. For instance, two pictures captured by two different sensing devices, for instance cameras, are combined to obtain a stereoscopic image.

It also comprises the step of processing, at the merging node, the merged data packet by providing a time stamp information to the data packet. The timestamping of the merged data packet may be performed in a manner similar to that described above in connection with the (non-merged) data packets. Moreover, timestamping may either involve using a plurality of timestamps, one for each data packet received at the merging node, or a single timestamp associated with the merging/processing at the merging node. A second hash value may then be generated based on the merged data packet, the plurality of hash value blocks, and the time stamp information. In particular, the second hash value of the merged data packet may be generated in a manner similar to that described above in connection with the (non-merged) data packets, wherein the hashing procedure is performed based on the merged data packet. Finally, the processed merged data packet and the merged hash value block may be transmitted to a subsequent node.

A merging node may be a node which is connected to a plurality of other nodes in a multibranch structure. An example of a merging node may for instance be the zonal controller 2 of FIG. 1B, since it is connected to two data generating nodes 1 and to three domain controller nodes 3.

This configuration, by taking into account the possibility that a node may merge data packets may extend the traceability of the used data within the vehicle.

### Hardware configuration

According to an embodiment of the present disclosure there is provided a device, referred to as node above, such as the node illustrated in Fig. 7, for processing a data packet in a vehicle having a plurality of nodes interconnected in a network, by generating a chain of hash value blocks the device comprising: a receiving unit configured to receive a data packet and a first hash value block associated with the data packet from a previous node; a processing unit configured to process the data packet by providing a time stamp information to the data packet; a generation unit configured to generate a second hash value block based on the data packet, the first hash value block, and the time stamp information; a transmitting unit configured to transmit the processed data packet and the second hash value block to a subsequent node. It also comprises a latency time determination unit configured to determine the latency time based on the second hash value block. Alternatively, it may also comprise a latency time receiving unit configured to receive the latency time determined based on the second hash value block. For instance, the latency time may be determined at the server and then received at the device.

Fig. 7 is a schematic illustration of a hardware structure of a network node NODE which may be configured to implement any of the methods described above.

The node NODE has an interface module N1 providing means for transmitting and receiving information, such receiving and/or transmitting data packets and hash value blocks from a previous node and a subsequent node, respectively, as described above. The node NODE has also a processor N2, e.g. a CPU, for controlling the node and for, for instance, process the data packets and generate the hash value blocks. It also has a working memory N3, e.g. a random-access memory, and an instruction store N4 storing a computer program having computer-readable instructions which, when executed by the processor node, cause the processor node to perform the methods of any of the embodiments disclose above.

The instruction store N4 may include a ROM, e.g. in the form of an electrically-erasable programmable read-only memory, EEPROM, or flash memory, which is pre-loaded with the computer-readable instructions. Alternatively, the instruction store N4 may include a RAM or similar type of memory, and the computer-readable instructions can be input thereto from a computer program product, such as a computer-readable storage medium such as a CD-ROM, etc.

According to a further embodiment of the present disclosure there is provided a vehicle including the device, i.e. node, for processing a data packet. The vehicle may have for instance a zonal control architecture as that explained above in connection with Fig. 1A and/or Fig 1B. In particular, the vehicle may comprise a plurality of zones associated with plurality of respective nodes. Each of these zones may be associated with at least one respective node. In other words, the vehicle comprises at least one zone associated with one node. Moreover, the vehicle may comprise at least one sensor. According to some embodiment, each zone of the vehicle may be associated with a plurality of sensors. In other words, each zone of the vehicle may be associated with at least one sensor.

While in the above discussion for the sake of explanation reference was made to a radar device as being associated with the data generating node, the present disclosure is not limited thereto. The data generating node may also be associated with sensors or sensing devices different from the radar, for instance it may be associated with a camera, or a lidar sensor of the vehicle. Additionally, it may be associated with a temperature sensor, for instance an engine temperature sensor or ambient temperature sensor, or with a pressure sensor, for instance tire pressure sensor, coolant pressure sensor. Further examples of sensors may also be revolution counter sensor, level detector sensor or signal receiver, for instance of a GPS, radio or internet signal. Of course, the sensors are not limited to those explicitly listed herein.

Moreover, a data generating node may also be not associated with a sensor and may generate otherwise data packets. In fact, data generation can, in principle, take place in any node as for instance a zonal controller.

Additionally, while in the examples provide above, the comparison is carried out at the vehicle, i.e. by one of the node, the present disclosure is not limited thereto and the comparison may also be carried out by an external server which receives at least a hash value block. Preferably, the external server may be a cloud server. This may also allow to improve vehicle architecture by analysis the hash value blocks on the server. Moreover, analysing the system behaviour at the server may also allow to update the predetermined value or range of values.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another, e.g., program, procedure, process, application, module, unit, logic, and so on, as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way. It is also to be understood that any procedures recited in the claims need not be performed in the order presented.

While this specification contains many specific embodiment details, these should not be construed as limitations on the scope of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

## Claims

1. A method of processing a data packet in a vehicle having a plurality of nodes interconnected in a network, by generating a chain of hash value blocks,
the method comprising, for each of the nodes:
- receiving a data packet and a first hash value block associated with the data packet from a previous node;
- processing the data packet by providing a time stamp information to the data packet;
- generating a second hash value block based on the data packet, the first hash value block, and the time stamp information; and
- transmitting the processed data packet and the second hash value block to a subsequent node;
the method further comprising determining the latency time based on the second hash value block.

2. The method of processing a data packet of claim 1 further comprising the steps of:
- determining the latency time by comparing the time stamp information of the second hash value block with a predetermined value or with a predetermined range of values; and
- determining a malfunctioning based on the result of the comparison.

3. The method of processing a data packet of claim 2, further comprising the step of:
- flagging or discarding the processed data packet based on a result of the comparison of the second hash value block.

4. The method of processing a data packet of any one of the preceding claims, further comprising the step of:
transmitting the processed data packet to the subsequent node in cleartext.

5. The method of processing a data packet of any one of the preceding claims wherein the generated second hash value block comprises:
- information indicative of the processed data packet;
- the time stamp information;
- a first hash value, wherein the first hash value is a hash value of the first hash value block;
- a second hash value.

6. The method of processing a data packet of claim 5, wherein the first hash value of the second hash value block is a second hash value of the first hash value block, or
wherein the second hash value is based on the data packet, the first hash value, the time stamp information and information indicative of the node.

7. The method of processing a data packet of any one of the preceding claims, further comprising the steps of:
- determining a distance information between the node and another node; and
- determining a time information between the node and the other node.

8. The method of processing a data packet of any one of the preceding claims further comprising the steps of:
- transmitting the second hash value block to an external server;
- evaluating at the server the second hash value block.

9. The method of processing a data packet of any one of the preceding claims wherein
- at least one node of the plurality of nodes is a data processing node configured to process the data packet and generate the second hash value block.

10. The method of processing a data packet of any one of the preceding claims, wherein the previous node is a data generating node associated with a sensing device, the previous node being configured to generate the data packet; the method further comprising the steps of:
- providing, by the data generating node, a time stamp information to the data packet;
- generating, by the data generating node, the first hash value block based on the output data, and the time stamp information.

11. The method of processing a data packet of any one of claims 2 to 10, wherein
- the predetermined value or the predetermined range of values are associate with a time at which the node expects the data packet.

12. The method of processing a data packet of any one of the preceding claims further comprising the steps of:
- merging two or more pluralities of hash value blocks into a merged hash value block, the merging comprising:
- receiving a plurality of data packets and a plurality of hash value blocks from a plurality of nodes, each hash value block of the plurality of hash value blocks being associated with a data packet from the plurality of data packets;
- processing the merged data packet by providing a time stamp information to the merged data packet;
- generating a second hash value based on the merged data packet, the plurality of hash value blocks, and the time stamp information; and
- transmitting the processed merged data packet and the merged hash value block to a subsequent node.

13. A computer program comprising instructions which, when the program is executed by a computer, cause the computer to carry out the method of any of claims 1 to 12.

14. A device for processing a data packet of in a vehicle having a plurality of nodes interconnected in a network, by generating a chain of hash value blocks, the device comprising:
- a receiving unit configured to receive a data packet and a first hash value block associated with the data packet from a previous node;
- a processing unit configured to process the data packet by providing a time stamp information to the data packet;
- a generation unit configured to generate a second hash value block based on the data packet, the first hash value block, and the time stamp information;
- a transmitting unit configured to transmit the processed data packet and the second hash value block to a subsequent node; and
a latency time determination unit configured to determine the latency time based on the second hash value block, or
a latency time receiving unit configured to receive the latency time determined based on the second hash value block.

15. A vehicle comprising:
- at least one zone associated with a node,
- at least one sensor associated with the zone, and
- a device according to claim 14.
